# EUROPEAN PATENT SPECIFICATION

(11) **EP 1 808 628 B1**
(45) Date of publication and mention of the grant of the patent: **27.01.2010**
(21) Application number: 06123517.2
(22) Date of filing: 06.11.2006
(51) Int. Cl.: F16L 3/04, F16B 15/02, H02G 3/32

(54) **Clamping device for ducts**
Klemmvorrichtung für Leitungen
Dispositif de serrage pour des conduites

(30) Priority: 09.11.2005 NO 20055276
(43) Date of publication of application: 18.07.2007
(73) Proprietor: Pettersen, Thor Gunnar, 3023 Drammen (NO)
(72) Inventor: Pettersen, Thor Gunnar, 3023 Drammen (NO)
(74) Representative: Bergquist, Kjell Gunnar

(56) References cited:
- WO-A-99/47844
- DE-C- 876 341
- GB-A- 688 558
- GB-A- 2 148 441

## Description

The present invention relates in general to a clamping device for attaching pipes or tubes, such as for example water pipes, gas pipes or ducts for pulling electrical cables, to a supporting surface, such as plaster boards. The clamping device comprises a U-shaped main body having a diameter which corresponds to the diameter of the pipe or tube to be attached. At its two free ends, the clamping device is configured with attachment means, intended to be pressed into the plaster board in order to secure the pipe or tube to the board, said attachment means coincides with the extension of the legs of the U-shaped main body. Said attachment mean are configured to be pressed or driven into the supporting surface, in order to fix the clamping device to the supporting surface.

Is has previously been propose to use clamping device for attaching pipes to walls, wherein the clamping device is given a more or less U-shaped main part and where a straight nail is arranged at the end of each of the leg of the U-shaped main part. The nails are intended to be forced into the wall when attaching a pipe by means of the clamping device. A disadvantage with such clamping device is that use of straight nails is not suited for obtain a secure attachment on plaster walls, since the plaster material provides very low retaining force for such nails.

NO 158,477 and GB 2 148 441 A, respectively describe a U-shaped clamping device intended to be forced into wood, where the U-shaped head is provided with a single nail on each of the legs of the U-shaped head. The nail(s) is intended to be driven into the supporting surface by means of a suitable tool, while the U-shaped head is intended to extend out from the supporting surface, attaching the pipe to said surface. Portions of the material forming the U-shaped head is pressed outwards, forming a bead on each side of the clamping device, aligned with the nails and forming a flat portion at the top of the U-shaped head.

NO 306,363 and WO 99/47844, respectively describe a J-shaped clamping device for attaching installations, such as electrical cables, pipes and the like to a supporting surface. The clamping device comprises a retaining portion intended to cooperate with said installation and an attachment means in the form of two nails intended to be bent sideways away from each other when forced into the supporting surface. Further, the clamping device may preferably be provided with a central nail, arranged between said two nails.

According to Norwegian building traditions and practice, it is to a large extent common to attach tubes or pipes to the wooden framework in a wall. In Europe, however, the building standards and practice are different. According to the European standard, it is a requirement that the pulling duct may be attached to the plaster boards, at its rear side. In order to meet such requirements, other properties of the clamping device are required.

A clamping device according to the preamble of claim 1 is known from DE 876 341 C.

An object of the present invention is to provide a clamping device which meets the building requirement in Europe and which also gives the European building operator the possibility of an effective and rational building procedure.

Another object of the invention is to provide a clamping device which easily may be forced into the supporting structure and which is configured in such way that the clamping device is as rigid as possible, where the bottom of the U-shaped main body will not be deformed during the attachment process, even if the clamping device is hit aslant by a tool.

A still further object according to the invention is to provide a clamping device, enabling attachment to the rear side of a plaster board, for example boards with a thickness of 13 mm, providing sufficient retaining force for the duct to be attached without affecting the front side of the plaster board, either by penetration or observable deformations.

A still further object of the invention is to provide a clamping device enabling fixation of the duct prior to attachment of the clamping device to the supporting surface.

The objects according to the invention are obtained by applying a clamping device as further defined in the independent claim, and in particular as defined by the characterizing part.

A further important advantage is that the visible front surface of the plaster board, when installed, will not be damaged by the nails of the clamping device.

A still further advantage is that the pulling duct may be fixed during attachment so that the duct is prevented from displacement with respect to the clamping device subsequent to attachment of the clamping device, and at least prior to attachment of the clamping device to the supporting surface.

A preferred embodiment of the invention shall in the following be described in further detail, referring to the accompanying drawings, in which:
Figure 1 shows in perspective a preferred embodiment of the clamping device according to the invention;
Figure 2 shows a second embodiment of the clamping device according to the invention; and
Figure 3 shows the clamping device shown in Figure 1 or 2, also showing the pipe or tube attached to the supporting surface.

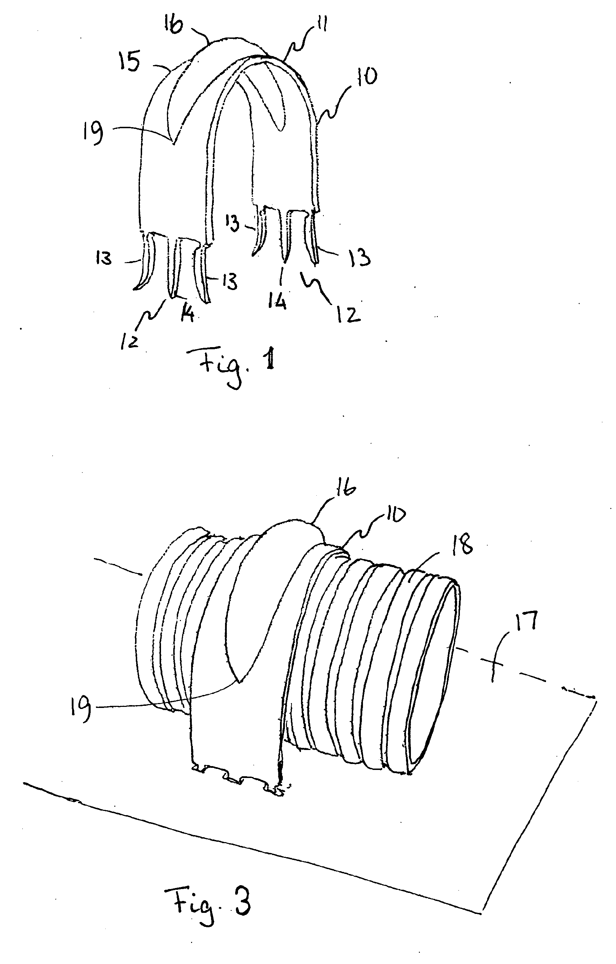

Figure 1 shows a perspective view of a preferred embodiment of the clamping device 10 according to the invention. The clamping device 10 comprises a U-shaped main body 11 and two attachment means 12, extending out from the legs of the U-shaped main body 11. Each attachment means 12 comprises two wing nails 13 and an intermediate, centrally arranged centre nail 14. The centre nail 14 is somewhat longer than the two wing nails 13, so that the centre nail 14 engages with the plaster board (not shown) before the two wing nails 13 when the clamping device 10 is positioned around a pipe or tube for attachment of said pipe or tube and before forcing the clamping device 10 into the supporting surface.

The radius of the U-shaped main body 11 corresponds more or less to the radius of the tube or pipe to be attached to the supporting surface.

The wing nails 13 may preferably be configured in such way that when the attachment means 12 of the clamping device 10 are driven into the supporting surface, the wing nails 13 are bent sideways out in order to improve the attachment grip of the clamping device 10 in the plaster board. The wing nails 13 may for this purpose be configured with a weakening part in the form of a notch, positioned at the root of each wing nail 13. The notches may, however be arranged on the opposite side of the foot of each wing nail 13. Further, each wing nail 13 may have such shape that they are forced laterally sideways when forced into the supporting surface.

Along the closed end 15 of the U-shaped main body 11, the clamping device 10 is provided with an outwards extending, continuous bead or collar 16, extending along the entire curved part of the U-shaped main body 11 and being terminated in the area above the central nail 14. The end of the bead or collar 16 and its orientation is such that the bead or collar 16 coincides with an imaginary line from the edge of one central nail 14, along the entire periphery of the U-shaped main body 11 to the edge of the opposite central nail 14.

The purpose of the bead or the collar 16 is to stiffen the U-shaped part of the clamping device 10, so that said part is not deformed when the clamping device 10 is forced into the supporting surface, and so that the pipe or the tube to be attached to the supporting surface is not damaged during such attachment process.

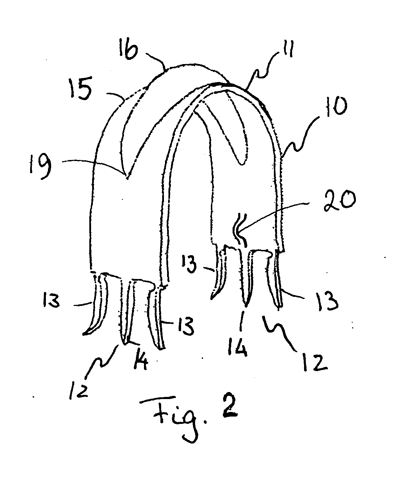

Figure 2 shows a preferred embodiment of the invention, wherein the clamping device 10 in general corresponds to the clamping device 10 shown in Figure 1, the only main difference being that the clamping device 10 according to Figure 2 is provided with inwards projecting bead(s) 20 on each leg of the U-shaped main body 10. The purpose of such beads 20 is to reduce the open space between the two legs of the U-shaped main body 11, so that the clamping device 10 more easily may be fixed to the pipe or tube 18, at least prior to attachment to the supporting surface 18.

The bead 20 may preferably be positioned in the region of the transition between the attachment means 12 and the adjacent part of the legs of the U-shaped main body 11. Said bead 20 may consist of one or more bosses or of an elongated body. Said one or more bosses or the elongated body may either extend in the longitudinal direction of the legs of the U-shaped main body 11 or in a transverse direction with respect to said legs.

Said bead 20 may preferably provide additional stiffness to the clamping device 10, so that the clamping device 10 is not deformed during attachment to the supporting surface.

Figure 3 shows the clamping device 10 used for attachment of a duct 18 for pulling electrical cables (not shown) to a supporting surface 17, for example in the form of a plaster board. As indicated in the Figure, the bead 16 extends along the entire curved part of the U-shaped main body 11.

In Figure 1 and 2, one bead is shown, forming a doubled curved body. It should be appreciated, however, that the clamping device 10 may be provided with several parallel beads 16, for example two beads, extending along the edges of the clamping device 10, or three beads 16. The two ends of the beads may in such latter case coincide with the nails 13,14. Further, it should be appreciated that the bead(s) 16 may have a shape which differs from the doubled curved shape shown in the Figures.

According to the invention a safe and secure attachment of pipes or tubes to plaster boards is obtained, providing a large attachment force even in plaster boards, and without producing detrimental damage or leaving un-esthetical appearance to the opposite side of the plaster boards.

According to an alternative embodiment of the invention, the inwards projecting bead 20 on each leg may consist of two beads, arranged just above each of the two wing nails, or may consist of three beads 20, arranged just above each of the three nails 13,14.

## Claims

1. Clamping device (10) intended for attachment of a pipe (18), such as a water pipe, gas pipe or ducts for pulling electrical cables, to a supporting plaster board (17), where the clamping device (10) comprises a U-shaped main body (11) having a diameter which more or less is adapted to the diameter of the pipe (18), and where the clamping device (10) at its two free ends is provided with attachment means (12) intended to be forced into the plaster board (17) for attachment of the pipe (18), each attachment means (12) comprising two wing nail (13), the two wing nails (13) being configured to bend in sideways direction away from each other when the clamping device (10) is forced into the plaster board (17) for enhancing the attachment force of the attachment means (12) in the plaster board (17) and where the clamping device (10) along its curved part (15) is provided with at least one outwards projecting, curved, continuous bead or collar (16) following the curvature of the curved part (15) of the U-shaped main body (11),
**characterized in that** each attachment means (12) further comprises a centrally arranged nail (14), positioned between said two wing nails (14), the centrally arranged nail (14) being longer than the two wing nails (13) and being configured in such way that each of the ends (19) of the bead or collar (16) are aligned with the centrally arranged nails (14).

2. Clamping device (10) according to claim 1, wherein an inwards projecting bead (20) is arranged on the internal surface of the leg(s) of the U-shaped main body (11) in the transition region to the attachment means (12), such bead(s) restricting the distance between the two legs, enabling the clamping device (10) to be fixed with respect to the pipe or tube (18) during the attachment phase.

3. Clamping device (10) according to claim 2, wherein the inwards projecting bead(s) (20) is positioned between the central nail (14) and the end of the at least one bead or collar (16).

4. Clamping device (10) according to claim 2 or 3, wherein the bead (20) is elongated and extends in the longitudinal direction of the legs of the U-shaped main body (11).

5. Clamping device (10) according to claim 2 or 3, wherein the bead (20) is elongated and extends in lateral direction with respect to the legs of the U-shaped main body (11).

6. Clamping device (10) according to one of the claims 2-5, wherein the bead (20) is formed by one or more aligned bosses, preferably arranged in transverse direction of the leg(s) of the U-shaped main body (11).

7. Clamping device (10) according to claim 6, wherein three bosses are used, positioned directly above each of the nails (13, 14).

## Patentansprüche

1. Klemmvorrichtung (10), die zur Befestigung einer Leitung (18), wie einer Wasserleitung, einer Gasleitung oder Kanälen zum Ziehen elektrischer Leitungen, gedacht ist, um auf einer Putzplatte (17) abstützt zu werden, wobei die Klemmvorrichtung (10) einen U-förmigen Hauptkörper (11), der einen Durchmesser aufweist, der mehr oder weniger an den Durchmesser der Leitung (18) angepasst ist, aufweist und wobei die Klemmvorrichtung (10) an ihren beiden freien Enden mit einer Befestigungseinrichtung (12), die gedacht ist, um in die Putzplatte (17) zur Befestigung der Leitung (18) eingepresst zu werden, versehen ist, wobei jede der Befestigungseinrichtungen (12) zwei Flügelnägel (13) umfasst, wobei die zwei Flügelnägel (13) ausgebildet sind, um sich seitlich voneinander weg zu biegen, wenn die Klemmvorrichtung (10) in die Putzplatte (17) zum Verbessern der Befestigungskraft der Befestigungseinrichtung (12) an der Putzplatte (17) gedrückt wird, und die Klemmvorrichtung (10) entlang ihres gekrümmten Abschnittes (15) mit zumindest einer nach außen hervorstehenden, gekrümmten, durchgängigen Leiste oder Manschette (16), die der Krümmung des gekrümmten Abschnitts (15) des U-förmigen Hauptkörpers (11) folgt, versehen ist,
**dadurch gekennzeichnet, dass**
die Befestigungseinrichtung (12) ferner einen zentral angeordneten Nagel (14), der zwischen den zwei Flügelnägeln (14) angeordnet ist, umfasst, wobei der zentral angeordnete Nagel (14) länger ist als die beiden Flügelnägel (13) und auf eine solche Weise ausgebildet ist, dass jedes der Enden (19) der Leiste oder Manschette (16) mit den zentral angeordneten Nägeln (14) fluchtet.

2. Klemmvorrichtung nach Anspruch 1, bei der eine nach innen hervorstehende Leiste (20) auf der inneren Oberfläche des/der Beins/Beine des U-förmigen Hauptkörpers (11) in dem Übergangsbereich hin zu der Befestigungseinrichtung (12) angeordnet ist, wobei die Leiste/Leisten, die den Abstand zwischen den beiden Beinen begrenzen, es ermöglichen, dass die Klemmvorrichtung (10) in Bezug auf die Leitung oder das Rohr (18) während der Befestigungsphase fixiert werden.

3. Klemmvorrichtung nach Anspruch 2, bei der die nach innen hervorstehende(n) Leiste(n) (20) zwischen dem zentralen Nagel (14) und an dem Ende der zumindest einen Leiste oder Manschette (16) angeordnet ist.

4. Klemmvorrichtung nach Anspruch 2 oder 3, bei der die Leiste (20) verlängert ist und sich in der Längsrichtung der Beine des U-förmigen Hauptkörpers (11) erstreckt.

5. Klemmvorrichtung nach Anspruch 2 oder 3, bei der die Leiste (20) verlängert ist und sich in Querrichtung in Bezug auf die Beine des U-förmigen Hauptkörpers (11) erstreckt.

6. Klemmvorrichtung einem der Ansprüche 2 bis 5, bei der die Leiste (20) durch einen oder mehrere ausgerichtete Buckel, die bevorzugt in Querrichtung des/der Beins/Beine des U-förmigen Hauptkörpers (11) angeordnet sind, ausgebildet ist.

7. Klemmvorrichtung nach Anspruch 6, bei der drei Buckel, die direkt über jedem der Nägel (13, 14) angeordnet sind, verwendet werden.

## Revendications

1. Dispositif d'attache (10) conçu pour la fixation d'un tuyau (18), tel qu'une conduite d'eau, une conduite de gaz ou des conduits destinés à tirer des câbles électriques, vers une plaque de plâtre (17) de support, où le dispositif d'attache (10) comprend un corps principal (11) en forme de U dont le diamètre est plus ou moins adapté au diamètre du tuyau (18) et où le dispositif d'attache (10) est doté, à ses deux extrémités libres, d'un moyen de fixation (12) conçu pour être placé en force dans la plaque de plâtre (17) pour une fixation du tuyau (18), chaque moyen de fixation (12) comprenant deux pattes à clouer (13), les deux pattes à clouer (13) étant conçues pour plier dans la direction latérale en s'écartant mutuellement quand le dispositif d'attache (10) est placé en force dans la plaque de plâtre (17), afin d'améliorer la résistance de fixation des moyens de fixation (12) dans la plaque de plâtre (17), et dans lequel le dispositif d'attache (10) est doté, le long de sa partie incurvée (15), d'au moins une nervure ou d'un collier (16) faisant saillie vers l'extérieur, incurvé et continu, qui suit la courbure de la partie incurvée (15) du corps principal (11) en forme de U,
**caractérisé en ce que** chaque moyen de fixation (12) comprend en outre une pointe centrale (14), située entre les deux pattes à clouer (13), la pointe centrale (14) étant plus longue que les deux pattes à clouer (13) et conçue pour que chacune des extrémités (19) du collier ou de la nervure (16) soit alignée avec les pointes centrales (14).

2. Dispositif d'attache(10) selon la revendication 1, dans lequel une nervure (20) faisant saillie vers l'intérieur se trouve à la surface interne de la ou des patte(s) du corps principal (11) en forme de U, dans la zone de transition vers le moyen (12) de fixation, cette ou ces nervure(s) limitant la distance entre les deux pattes, ce qui permet de fixer le dispositif d'attache (10) par rapport au tuyau ou à la conduite (18) pendant la phase de fixation.

3. Dispositif d'attache (10) selon la revendication 2, dans lequel la ou les nervure(s) (20) faisant saillie vers l'intérieur se trouve(nt) entre la pointe centrale (14) et l'extrémité de la nervure ou du collier (16) au nombre d'au moins un.

4. Dispositif d'attache (10) selon la revendication 2 ou 3, dans lequel la nervure (20) est allongée et s'étend dans la direction longitudinale des pattes du corps principal (11) en forme de U.

5. Dispositif d'attache (10) selon la revendication 2 ou 3, dans lequel la nervure (20) est allongée et s'étend dans la direction latérale par rapport aux pattes du corps principal (11) en forme de U.

6. Dispositif d'attache (10) selon les revendications 2 à 5, dans lequel la nervure est formée par un ou plusieurs bossages alignés, disposés de préférence dans la direction transversale des patte(s) du corps principal (11) en forme de U.

7. Dispositif d'attache (10) selon la revendication 6, dans lequel on utilise trois bossages, placés directement au-dessus de chacune des pointes (13, 14).
